Europäisches Patentamt

European Patent Office

Office européen des brevets

(19)

(11) Numéro de publication: **0 197 841**
**A1**

(12) **DEMANDE DE BREVET EUROPEEN**

(21) Numéro de dépôt: 86400643.2

(22) Date de dépôt: 26.03.86

(51) Int. Cl.⁴: **G 02 B 6/42**

---

(30) Priorité: 29.03.85 FR 8504853

(43) Date de publication de la demande:
15.10.86 Bulletin 86/42

(84) Etats contractants désignés:
DE GB IT SE

(71) Demandeur: SOCAPEX
10 bis, quai Léon Blum
F-92153 Suresnes(FR)

(72) Inventeur: Laroulandie, Pierre-Jean
24, rue de Silly
F-92100 Boulogne Billancourt(FR)

(72) Inventeur: Lefevre, Jean-Pierre
Résidence Marcel Sembat 12, rue Edouard Vaillant
F-92800 Puteaux(FR)

(74) Mandataire: Brullé, Jean
Service Brevets Bendix 44, rue François 1er
F-75008 Paris(FR)

(54) **Duplexeur optique à raccordement optique semi-permanent intégré.**

(57) L'invention a pour objet un duplexeur optique comprenant, dans un même boîtier (34), une diode électroluminescent (14), destinée à émettre un faisceau lumineux vers une fibre optique extérieure (11) pouvant être munie de son tube de protection, et une photodiode (13) destinée à recevoir un faisceau lumineux issu de la même fibre, le duplexeur comprenant des moyens de traitement optique des faisceaux et des moyens de raccordement optique de la fibre optique extérieure auxdits moyens de traitement, les moyens de raccordement optique comprenant un bloc de rétention tube (31) et des blocs d'alignment (32, 33) de la fibre.

FIG_3

EP 0 197 841 A1

Croydon Printing Company Ltd.

# DUPLEXEUR OPTIQUE A RACCORDEMENT
## OPTIQUE SEMI-PERMANENT INTEGRE

La présente invention a pour objet un duplexeur, c'est-à-dire un composant d'interface électro-optique entre une fibre optique, une diode électroluminescente et une photodiode.

Un tel duplexeur assure d'une part le couplage entre un signal optique sortant émis par la diode électroluminescente et destiné à être véhiculé par la fibre, et d'autre part le couplage entre un signal optique entrant véhiculé par la même fibre optique et la photodiode.

Actuellement, de tels duplexeurs sont du type dit à queue de cochon, c'est-à-dire qu'ils sont livrés avec un petit bout de fibre optique solidaire du duplexeur et destiné à être raccordé pour son utilisation à une autre fibre optique appartenant à un circuit de traitement du signal ou à une ligne de transmission. Il est nécessaire alors de procéder au raccordement de ces deux fibres au moyen d'une épissure semi-permanente. On introduit donc un dispositif de raccordement supplémentaire ce qui ne peut qu'altérer la qualité de la transmission.

Afin de pallier ces inconvénients, le duplexeur selon l'invention permet le raccordement direct de la fibre optique de ligne sur le duplexeur proprement dit. Ceci est rendu possible en associant un dispositif optique de traitement du signal et un système permettant à la fois la rétention de la fibre optique de ligne et son positionnement par rapport au dispositif optique de traitement.

L'invention a donc pour objet un duplexeur optique comprenant, dans un même boîtier, une diode électroluminescente destinée à émettre un faisceau lumineux vers une fibre optique extérieure pouvant être équipée de son tube de protection, et une photodiode destinée à recevoir un faisceau lumineux issu de la même fibre optique, le duplexeur comprenant également des moyens de traitement optique des faisceaux, caractérisé en ce que le duplexeur comprend en outre des moyens de raccordement optique de la fibre optique extérieure auxdits moyens de traitement, les moyens de raccordement optique comprenant un bloc de rétention tube et au moins un bloc d'alignement de ladite fibre.

L'invention sera mieux comprise et d'autres avantages apparaitront au moyen de la description qui va suivre et des figures annexées parmi lesquelles :

- la figure 1 illustre le principe de fonctionnement du dispositif selon l'invention;

- la figure 2 décrit un mode préférentiel de réalisation des moyens de traitement optique des faisceaux lumineux;

- la figure 3 décrit une version élaborée d'un duplexeur optique selon l'invention;

- la figure 4 décrit plus précisément la partie duplexeur proprement dite.

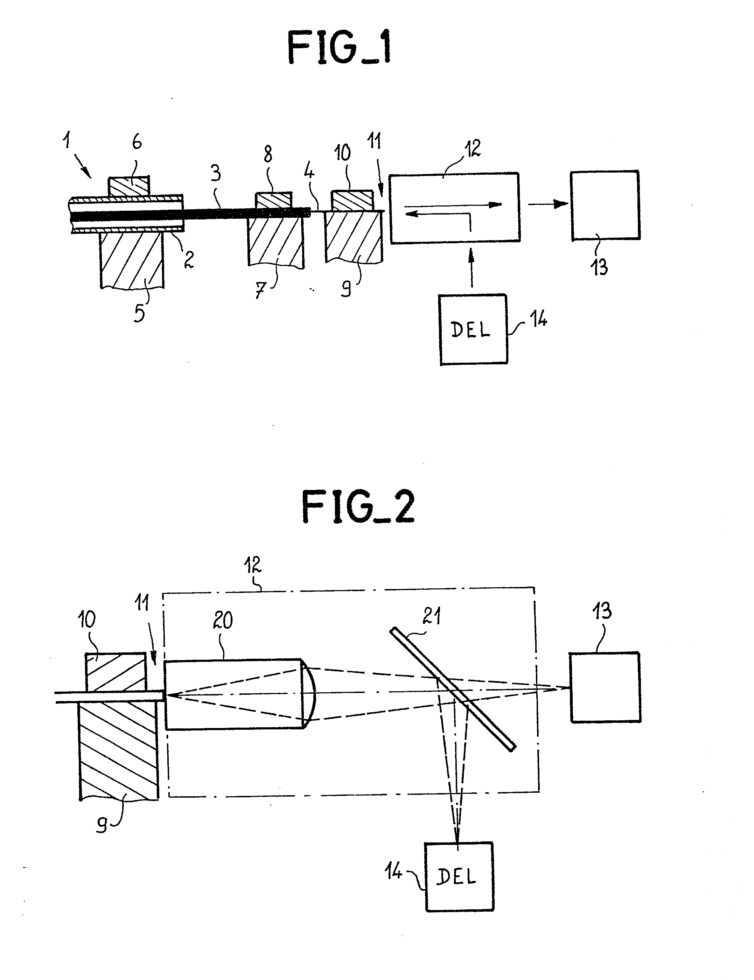

Le principe de fonctionnement du dispositif selon l'invention est illustré par la figure 1.

Sur cette figure, on a représenté le câble optique 1 comprenant une fibre optique à l'intérieur de son tube de protection 2. Les références 3 et 4 désignent respectivement la fibre non dénudée et la fibre dénudée de sa gaine protectrice. L'opération préalable au raccordement consiste à dégager une certaine longueur de fibre du tube de protection 2 et à dénuder une partie de cette longueur de fibre. Ces longueurs sont déterminées d'après les dimensions des différents éléments composant le dispositif de raccordement. Ce dispositif de raccordement comprend un bloc de rétention tube 5 équipé de sa bride 6, un premier bloc d'alignement 7 équipé de sa bride 8 et un second bloc d'alignement 9 équipé de sa bride 10. Le bloc de rétention 5 permet d'immobiliser le tube de protection 2 grâce à sa bride de rétention 6. Les blocs d'alignement 7 et 9 permettent, grâce à leurs brides 8 et 10, de maintenir la fibre avec des efforts de serrage appropriés. Une première position de serrage autorise le coulissement de la fibre et une seconde position de serrage assure le blocage de la fibre.

L'extrémité 11 de la fibre optique, qui est clivée, est destinée à être raccordée à des moyens de traitement optique 12. Ceux-ci permettent le transport des signaux optiques véhiculés par la fibre optique et déterminent leur sélection. La partie duplexeur optique proprement dite comprend les moyens de traitement optique 12, la photodiode 13 et la diode électroluminescente 14. Il est primordial que la connexion entre l'extrémité 11 de la fibre optique et les moyens de traitement 12 puisse être effectuée de façon précise et sûre afin d'obtenir une bonne qualité dans la transmission des signaux. C'est aux blocs d'alignement que revient la fonction d'assurer cette qualité d'alignement.

L'installation de la fibre optique est réalisée de la manière suivante. Les brides 6, 8 et 10 des blocs 5, 7 et 9 étant en position de repos, la fibre optique est engagée dans les blocs et placée approximativement dans la position requise. Le bloc de rétention 5, les blocs d'alignement 7 et 9, les moyens de traitement 12 et les diodes 13 et 14 étant fixes, c'est l'extrémité 11 de la fibre qui est déplacée finement vers la position de connexion idéale. Le tube est d'abord immobilisé par la bride de rétention 6. La bride 8 assure dans un premier temps la rétention de la partie non dénudée de la fibre sans pour autant l'immobiliser complètement. La bride 10 permet de plaquer la partie de la fibre qui est dénudée sans non plus l'immobiliser définitivement. Le coulissement de la fibre est rendu possible grâce au léger jeu axial existant entre la fibre et son tube de protection.

L'extrémité 11 de la fibre optique est alors amenée à la position désirée, par exemple en butée avec un élément des moyens de traitement optique des faisceaux 12. Cette opération est de préférence effectuée par l'intermédiaire d'un outil de mise en application. Une fois cette opération réalisée, les brides assurent le serrage définitif de la fibre. L'opération de connexion est alors terminée.

Il est avantageux que les blocs d'alignement disposent d'une rainure en V qui permettent une meilleure qualité d'alignement. Les parties réceptrices des blocs d'alignement 7 et 9 seront prévues, en fonction de l'épaisseur de la gaine protectrice de la fibre, pour éviter de courber la fibre optique ou de la plier. Il en va de même pour le logement du bloc de rétention tube.

Il est possible de ne prévoir qu'un seul bloc d'alignement mais l'opération de connexion est un peu plus délicate à réaliser.

La figure 2 décrit un mode préférentiel de réalisation des moyens de traitement optique des faisceaux. Sur cette figure, les mêmes références qu'à la figure 1 représentent les mêmes éléments. Les moyens de traitement 12 comprennent un élément 20 permettant les chemins optiques représentés par des pointillés sur la figure. Cet élément 20 peut être une lentille-barreau dont la face plane permet la mise en butée de l'extrémité 11 de la fibre optique. Les axes optiques de la fibre et de la lentille-barreau coïncident. Un faisceau lumineux issu de la fibre optique est traité par la lentille-barreau 20 de façon à converger vers la photodiode 13. Un miroir semi-réfléchissant 21 assure la sélection des faisceaux lumineux entrant et sortant. Un faisceau divergent issu de la diode électroluminescente 14 est renvoyé par le miroir 21 vers la lentille-barreau 20 et est focalisé à l'extrémité 11 de la fibre optique.

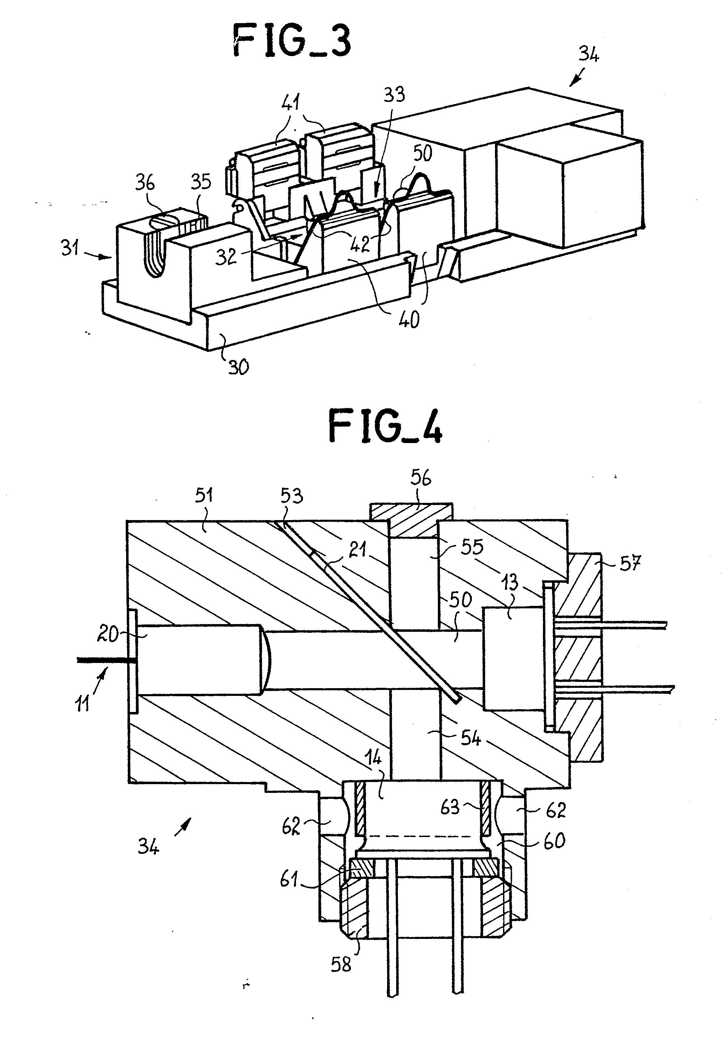

La figure 3 décrit une version élaborée d'un duplexeur optique à raccordement optique semi-permanent intégré selon l'invention. Sur un support 30, on a fixé le bloc de rétention tube 31, les blocs d'alignement 32 et 33 et le boîtier 34 qui renferme les moyens de traitement optique des faisceaux, la photodiode et la diode électroluminescente.

Le bloc de rétention tube comprend un logement 35 prévu pour recevoir le tube de protection du câble optique. Ce logement est de préférence strié afin d'augmenter la rétention du tube. La bride de rétention tube peut être réalisée de différentes façons. Ce peut être, comme représenté à la figure 3, une vis 36 dont le trou fileté de réception est percé perpendiculairement au logement 35 et à flanc d'une des parois de ce logement. Ce trou et le logement 35 présente donc une surface d'intersection. La vis 36 est coupée longitudinalement de façon à présenter, lorsque la bride de rétention tube est à l'état de repos, une continuité de surface avec le logement 35. En tournant la vis 36 d'environ un quart de tour, on peut alors bloquer un tube placé dans le logement 35.

Les blocs d'alignement 32 et 33 peuvent avantageusement être du type décrit dans la demande de brevet de la Demanderesse déposée sous le numéro d'enregistrement 83 20 197. Ils sont pratiquement semblables. Ils comprennent trois parties essentielles : un corps 40 sur lequel s'articule une bride 41 qui peut être maintenue sur le corps par un clip 42. La partie centrale du corps 40 est muni d'une rainure en V de réception de la fibre optique. Comme le montrait déjà la figure 1, la rainure du premier bloc d'alignement est plus profonde que la rainure du second pour compenser l'épaisseur de la gaine protectrice de la fibre optique. Il existe deux positions de serrage des brides 41 sur leurs corps correspondants. Une première position de serrage est réalisée quand, les brides étant en position fermée, les clips 42 sont placés dans une première gorge de réception située au bord de la bride. Cette première position de serrage permet de maintenir la fibre optique au fond des rainures tout en permettant son coulissement. Une seconde position de serrage est réalisée quand les clips 42 sont poussés un peu plus en avant pour venir se loger dans une seconde gorge de réception située derrière la première gorge. Cette seconde position de serrage assure le blocage de la fibre optique.

On peut remarquer sur la figure 3, deux détails qui ont leur importance. Premièrement, le bloc d'alignement 33 est placé le plus près possible du boîtier 34 de manière à ce que la fibre conserve une certaine rigidité lors de sa mise en butée. Deuxièmement, un espace est prévu entre le bloc de rétention tube 31 et le bloc d'alignement 32 pour pouvoir intercaler un outil de mise en application qui sera enlevé une fois l'opération réalisée. Cet outil peut avantageusement être du type décrit dans la demande de brevet de la Demanderesse portant le numéro d'enregistrement 84 01 052.

Sur le dessin de la figure 3, la bride de rétention tube 36 et les brides de rétention fibre 41 sont en position ouverte. On distingue également une partie du trou 50 réalisé dans le boîtier 34 et permettant la liaison optique entre la fibre optique et les moyens de traitement optique des faisceaux.

La figure 4 décrit, de manière détaillée, le boîtier 34 et les principaux éléments qu'il contient. Il est principalement constitué par un corps 51 percé suivant sa plus grande dimension d'un trou 50 qui est aménagé d'un côté pour recevoir une lentille-barreau 20 et de l'autre côté pour recevoir la photodiode 13. Une fente 53 inclinée à 45° par rapport à l'axe du trou 50 reçoit le miroir semi-réfléchissant 21. Le trou 54 qui débouche dans le trou 50, permet à un faisceau lumineux émis par la diode 14 d'être réfléchi par le miroir 21 vers la lentille-barreau 20. Un autre trou portant la référence 55 peut être percé en vis-à-vis du trou 54. Il sera fermé par un bouchon 56 et servira d'absorbeur de lumière pour éviter la réjection du signal optique émis par la diode électroluminescente vers la photodiode. La photodiode 13 est plaquée dans son logement par un bouchon 57 percé de trous laissant passer les connexions de la diode et collé sur le corps 51. Son positionnement ne requiert pas une grande précision si sa surface sensible est supérieure ou égale à 1 mm$^2$.

Par contre, le positionnement de la diode électroluminescente exige une bonne précision. Cette diode est logée dans le trou 60 du corps 51. Elle est maintenue par l'intermédiaire d'une vis creuse 58 qui permet le passage de ses connexions. Le diamètre du trou 60 est suffisamment grand pour prévoir un déplacement radial de la diode 14 afin d'assurer son positionnement. Une rondelle 61 peut être placée entre la diode 14 et la vis 58 afin d'éviter la rotation de la diode lors du serrage. Il est avantageux de disposer dans le corps 51 de quatre trous 62 placés à 90° l'un de l'autre et qui serviront à la micromanipulation de la diode 14. On peut également monter cette diode dans une bague de protection latérale 63. Le serrage de la diode électroluminescente par la vis 58 est calibré ce qui permet, grâce à un outil simple de micromanipulation, d'aligner la diode sur l'axe optique de la lentille-barreau 20.

Sur la figure 4, on a également représenté l'extrémité 11 de la fibre optique qui arrive en butée sur la lentille-barreau 20.

8    0197841

REVENDICATIONS

1. Duplexeur optique comprenant, dans un même boîtier, une diode électroluminescente (14) destinée à émettre un faisceau lumineux vers une fibre optique extérieure pouvant être équipée de son tube de protection (2), et une photodiode (13) destinée à recevoir un faisceau lumineux issu de la même fibre optique, le duplexeur comprenant également des moyens de traitement optique des faisceaux (12), caractérisé en ce que le duplexeur comprend en outre des moyens de raccordement optique de la fibre optique extérieure auxdits moyens de traitement, les moyens de raccordement optique comprenant un bloc de rétention tube (31) et au moins un bloc d'alignement (32, 33) de ladite fibre.

2. Duplexeur optique selon la revendication 1, caractérisé en ce que ledit bloc d'alignement (32, 33) procure deux positions de serrage de ladite fibre, une première position autorisant le coulissement de la fibre et une seconde position assurant son blocage.

3. Duplexeur optique selon l'une des revendications 1 ou 2, caractérisé en ce que le bloc de rétention tube (31) comprend un logement (35) de réception du tube et une bride de rétention tube (36).

4. Duplexeur optique selon la revendication 3, caractérisé en ce que la bride de rétention tube (36) est constituée par une vis introduite à flanc dudit logement (35) et tronquée longitudinalement.

5. Duplexeur optique selon l'une quelconque des revendications 1 à 4, caractérisé en ce que le bloc d'alignement comporte une rainure en forme de V pour recevoir la fibre optique.

6. Duplexeur optique selon l'une quelconque des revendications 1 à 5, caractérisé en ce que ledit bloc d'alignement comprend une bride de rétention fibre (41) et un clip (42) de fixation de la bride.

7. Duplexeur optique selon la revendication 6, caractérisé en ce que le déplacement du clip (42) entraîne la fixation de la bride selon ladite première position de serrage ou selon ladite seconde position de serrage.

8. Duplexeur optique selon l'une quelconque des revendications 1 à 7, caractérisé en ce qu'il comprend deux blocs d'alignement (32, 33), l'un assurant la rétention de la fibre non dénudée de sa gaine protectrice (3) et l'autre assurant le plaquage de la fibre dénudée (4).

9. Duplexeur optique selon l'une quelconque des revendications 1 à 8, caractérisé en ce qu'un espacement est prévu entre le bloc de rétention tube (31) et le bloc d'alignement suivant (32) pour pouvoir intercaler un outil de mise en application de la fibre optique sur lesdits moyens de traitement optique.

10. Duplexeur optique selon l'une quelconque des revendications 1 à 9, caractérisé en ce que les moyens de traitement optique comprennent une lentille-barreau (20) et un miroir semi-réfléchissant (21).

11. Duplexeur optique selon la revendication 10, caractérisé en ce que la connexion optique est obtenue par la mise en butée de l'extrémité (11) de la fibre optique sur ladite lentille-barreau (20).

FIG_1

FIG_2

## FIG_3

## FIG_4

Office européen
des brevets

**RAPPORT DE RECHERCHE EUROPEENNE**

EP  86  40  0643

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 103 527 (S.A. DE TELECOMMUNICATIONS) * Revendications 1-6; figures 2,11 * | 1,2,5, 6 | G 02 B   6/42 |
| A | FR-A-2 536 546 (AETNA TELECOMMUNICATIONS LABORATORIES) * Abrégé; figures * | | |
| A | PATENTS ABSTRACTS OF JAPAN, vol. 8, no. 51 (P-259) [1488], 8 mars 1984, & JP - A - 58 202 423 (FUJITSU K.K.) 25-11-1983 * En entier * | 10,11 | |
| A | EP-A-0 090 724 (SOCAPEX) | | DOMAINES TECHNIQUES RECHERCHES (Int. Cl.4) |
| P,A D | EP-A-0 146 471 (SOCAPEX) * Page 4, ligne 16 - page 5, ligne 32; figures 1a,1b * | 1-6 | G 02 B |

Le présent rapport de recherche a été établi pour toutes les revendications

| Lieu de la recherche | Date d'achèvement de la recherche | Examinateur |
|---|---|---|
| LA HAYE | 07-07-1986 | MORRELL D.M. |